# EUROPÄISCHE PATENTSCHRIFT

(11) **EP 1 704 012 B1**
(45) Veröffentlichungstag und Bekanntmachung des Hinweises auf die Patenterteilung: **22.04.2009**
(21) Anmeldenummer: 04796939.9
(22) Anmeldetag: 10.11.2004
(51) Int. Cl.: B23K 9/067, B23K 9/09

(54) **VERFAHREN ZUM BERÜHRUNGSLOSEN ZÜNDEN EINES SCHWEISSLICHTBOGENS MIT HOCHFREQUENTEN ZÜNDIMPULSPAKETEN**
METHOD OF CONTACTLESS IGNITION OF A WELDING ARC WITH HIGH FREQUENCY IGNITION PULSE PACKETS
PROCEDE D'AMOR AGE SANS CONTACT D'UN ARC DE SOUDAGE A L'AIDE DE PAQUETS D'IMPULSIONS D'AMOR AGE A HAUTE FREQUENCE

(30) Priorität: 25.11.2003 AT 18892003
(43) Veröffentlichungstag der Anmeldung: 27.09.2006
(73) Patentinhaber: Fronius International GmbH, 4643 Pettenbach (AT)
(72) Erfinder: PRINZ, Andreas, A-4501 Neuhofen (AT); PAMMER, Walter, A-4540 Bad Hall (AT); HIESLMAIR, Gerald, A-4533 Piberbach (AT); KROISS, Uwe, A-4073 Wilhering (AT)
(74) Vertreter: Sonn & Partner Patentanwälte
(86) Internationale Anmeldenummer: PCT/AT2004/000394
(87) Internationale Veröffentlichungsnummer: WO 2005/051585

(56) Entgegenhaltungen:
- EP-A- 1 197 285
- DE-A1- 19 507 649
- GB-A- 1 225 054
- US-A- 3 657 512
- US-A- 5 965 038
- PATENT ABSTRACTS OF JAPAN Bd. 017, Nr. 123 (M-1380), 15. März 1993 (1993-03-15) -& JP 04 305374 A (DAIHEN CORP), 28. Oktober 1992 (1992-10-28)

## Beschreibung

Die Erfindung betrifft ein Verfahren zum berührungslosen Zünden eines Schweißlichtbogens bei dem hochfrequente Zündimpulse zwischen die Schweißelektrode und dem zu bearbeitenden Werkstück zur Ionisierung der Strecke zwischen der Schweißelektrode und dem Werkstück angelegt werden, und bei dem nach dem Zünden des Schweißlichtbogens der Schweißstrom zugeschaltet wird (siche, z.B., US-A-3 659 512).

Das erfindungsgemäße Zündverfahren ist prinzipiell für die verschiedensten Schweißverfahren, beispielsweise WIG (Wolfram-Inert-Gas)-Schweißverfahren und Plasma-Schweißverfahren sowie für Schweißverfahren mit abschmelzender Elektrode oder nichtabschmelzender Elektrode geeignet. Weiters eignet sich die Anwendung des Zündverfahrens sowohl für handgeführte Schweißbrenner als auch für Schweißbrenner in automatischen Anwendungen, insbesondere bei Roboteranwendungen.

Beim Zünden von Schweißlichtbögen unterscheidet man zwischen dem Kontaktzünden und dem berührungslosen HF-Zünden. Beim Kontaktzünden wird die Schweißelektrode auf das Werkstück aufgesetzt und danach unter gleichzeitiger Zuschaltung des Schweißstromes etwas die Schweißelektrode wieder vom Werkstück abgehoben, worauf der Lichtbogen gezündet wird. Dieses Verfahren ist relativ einfach und kostengünstig und vermeidet Störungen anderer elektronischer Komponenten der Schweißanlagen durch die bei der HF-Zündung eingesetzte Hochfrequenz. Allerdings können durch die Kontaktierung der Schweißelektrode mit dem Werkstück Einschlüsse und Verunreinigungen am Werkstück entstehen und andererseits wird die Elektrode durch die Kontaktierung abgenützt.

Beim berührungslosen HF-Zünden hingegen bleibt die Schweißelektrode immer vom Werkstück beabstandet und zwischen Schweißelektrode und Werkstück wird eine hochfrequente Hochspannung angelegt, wodurch die Gasmoleküle im Raum zwischen Elektrode und Werkstück ionisiert werden, so dass der Schweißlichtbogen ohne Berührung des Werkstücks mit der Elektrode gezündet werden kann. Um ein unabsichtliches Berühren des Werkstücks mit der Elektrode verhindern zu können, werden dabei Abstände zwischen Elektrode und Werkstück bei denen die Zündung erfolgen kann von zumindest einigen Millimetern bis zu einigen Zentimetern angestrebt. Nach der Zündung des Lichtbogens wird der Schweißbrenner weiter vom Werkstück entfernt bzw. an das Werkstück herangefahren und mit dem normalen Schweißstrom versorgt und der normale Schweißvorgang kann beginnen. Die zur Erzeugung der Hochspannungsimpulse verwendeten elektronischen Schaltelemente müssen dabei die beträchtlichen Ströme bzw. Spannungen aushalten. Aus diesem Grund werden üblicherweise Thyristoren bzw. Halbleiterbauelemente und Funkenstrecken als Schalter eingesetzt.

Die EP 1 197 285 A2 zeigt eine Schaltungsanordnung zur Erzeugung von Zündimpulsen für Schweißlichtbögen mit einer Sperrwandlerschaltung mit vier Thyristoren in Brückenschaltung, welche von einer Triggerschaltung gesteuert werden. Zur Schaffung einer verbesserten Steuerung für die Zündimpulse erfolgt die Steuerung der Entladeschaltung zu Zeitpunkten, welche von den Parametern des Schweißprozesses abhängig sind. Nachteilig bei der Verwendung von Thyristoren als Schaltelemente ist, dass die maximale Schaltfrequenz relativ niedrig ist und darüber hinaus diese Bauelemente entsprechend groß dimensioniert werden müssen, wodurch es zu einer wesentlichen Verteuerung kommt. Durch die niedrige Schaltfrequenz der Thyristoren, welche beispielsweise bei 100 Hz liegt, wird eine schlechtere Ionisierung des Schutzgases erreicht, so dass es nicht immer sicher gestellt ist, dass eine sehr rasche bzw. sichere Zündung des Lichtbogens erfolgt.

Die EP 947 276 B1 zeigt ein Verfahren und eine Vorrichtung zur Zündung eines Schweißlichtbogens bei der der Ladekondensator über eine Funkenstrecke entladen wird. Funkenstrecken haben gegenüber Thyristoren den Vorteil, dass sie sehr robust sind und hohe Spannungen und Ströme aushalten. Darüber hinaus sind relativ hohe Schaltfrequenzen erzielbar. Nachteilig bei der Verwendung von Funkenstrecken ist die Baugröße und der aufgrund der meist notwendigen Kühlung erforderliche konstruktive Mehraufwand. Darüber hinaus unterliegen die Funkenstrecken einem hohen Verschleiß und es kann durch die Ozonerzeugung zur Oxidation von Komponenten kommen. Schließlich können die elektromagnetischen Störungen insbesondere bei sehr empfindlichen Robotersteuerungen zu Problemen führen, welche nur durch entsprechende zusätzliche Abschirmungen verhindert werden können.

Die US 4 870 248 A zeigt ein Lichtbogenschweißgerät mit verbesserter Zündfähigkeit. Dabei wird die Spannung zwischen der Elektrode und dem Werkstück gemessen, um die Zündung des Lichtbogens erfassen zu können. Wenn der Lichtbogen nicht gezündet wurde, wird ein höherfrequenter Zündimpuls angelegt und dadurch eine erhöhte Zündwahrscheinlichkeit erzielt. Solange der Lichtbogen nicht gezündet wurde, steigt die Spannung an der Elektrode bis der Lichtbogen schließlich gezündet wird. Nach der Zündung des Lichtbogens liefert ein Oszillator die für das Schweißverfahren notwendige Frequenz und Pulsweite. Die der Elektrode zugeführte Energie muss jedoch unter vorgeschriebenen Grenzwerten liegen. Eine exaktere Zündung des Lichtbogens ist mit der Schaltung gemäß diesem Dokument nicht erzielbar.

Die DE 33 42 932 A1 beschreibt ein Verfahren zum stoßfreien Zünden beim MIG-MAG-Schweißen, wobei zwischen dem Schweißdraht und dem Werkstück eine Hochfrequenz-Spannung angelegt wird, deren Zündfolge von der Drahtvorschubgeschwindigkeit abhängt. Dadurch muss die Drahtvorschubgeschwindigkeit während der Zündung nicht reduziert werden. Eine exaktere bzw. sichere Zündung des Lichtbogens wird dadurch jedoch nicht erzielt.

Die US 3 657 512 A zeigt eine Einrichtung zum berührungslosen Zünden eines Schweißlichtbogens, bei dem hochfrequente Zündimpulse zwischen der Schweißelektrode und dem zu bearbeitenden Werkstück zur Ionisierung der Strecke zwischen der Schweißelektrode und dem Werkstück angelegt werden. Auch die DE 195 07 649 A1 offenbart das Zünden des Lichtbogens durch Anlegen eines Hochspannungsimpulses zwischen der Schweißelektrode und dem Werkstück.

Die Aufgabe der vorliegenden Erfindung besteht in der Schaffung eines oben genannten Zündverfahrens, durch welches eine exaktere bzw, sichere und sehr schnelle Zündung des Lichtbogens möglich wird bzw. zur Schaffung einer höheren Zündfähigkeit. Der Aufwand des Verfahrens soll möglichst gering sein. Schließlich soll das Zündverfahren zur Zündung an die jeweiligen Schweißbedingungen angepasst werden können. Weiters soll die Zündung möglichst unabhängig von der jeweiligenLast funktionieren.

Das erfindungsgemäße Verfahren ist im Anspruch 1 definiert. Durch das Anlegen der Zündimpulse in mehreren Impulspaketen zwischen welchen entsprechend lange Pausen vorgesehen werden, kann die eingekoppelte Energie der Zündimpulse entsprechend hoch gewählt werden, so dass eine sichere und rasche Zündung zustande kommt, während die über die Zeit gemittelte maximal zulässige zugeführte Energie unter den vorgeschriebenen Grenzwerten angeordnet werden kann. Pro Impulspaket werden möglichst viele Zündimpulse angeordnet, was einer möglichst hohen Zündimpulsfrequenz bedarf. Durch eine höhere Anzahl von Zündimpulsen wird die Ionisation des Gases zwischen Schweißelektrode und zu bearbeitendem Werkstück erleichtert und somit eine leichtere Zündung des Schweißlichtbogens erzielt. Das erfindungsgemäße Zündverfahren zeichnet sich durch eine besonders hohe Qualität und eine sichere bzw. rasche Zündung des Lichtbogens aus. Das Zündverfahren ermöglicht eine Zündung bei größerem Abstand zwischen Schweißelektrode und Werkstück oder bei üblichem Abstand eine wesentlich exaktere Zündung als es bei üblichen Verfahren der Fall ist. Durch die geringe im Mittel eingebrachte Energie wird auch das Sicherheitsrisiko minimiert, d.h., dass der Bediener des Schweißbrenners nicht bzw. nicht so stark elektrisiert werden kann. Durch diese geringere Elektrisierwirkung können Unfälle, beispielsweise ein Fall des Schweißarbeiters von einem Gerüst oder dgl. vermieden werden.

Dadurch, dass die in einem Impulspaket ausgegebenen Zündimpulse in der Anzahl und/oder Frequenz verändert werden, wird in vorteilhafter Weise eine optimale Anpassung des Zündprozesses an die unterschiedlichsten Bedingungen erreicht.

Vorteilhafterweise ist das Verhältnis der Wiederholungsrate bzw. der Periodendauer der Impulspakete zur Dauer der Zündimpulse hoch.

Gemäß einem weiteren Merkmal der Erfindung werden die Zündimpulse innerhalb eines Impulspakets mit einer Periodendauer beispielsweise zwischen 25 µs und 1 ms, vorzugsweise 125 µs an die Schweißelektrode angelegt. Durch eine derartig niedrige Periodendauer bzw. hohe Wiederholungsfrequenz der Zündimpulse wird erzielt, dass die Ionisation des Gases zwischen der Schweißelektrode und dem Werkstück rascher und stärker und somit eine leichtere Zündung des Schweißlichtbogens erfolgt. Eine derartig niedrige Periodendauer bzw. hohe Wiederholungsfrequenz war mit den bisherigen Zündschaltungen, in welchen Thyristoren verwendet wurden, nicht möglich.

Die Periodendauer der Impulspakete liegt gemäß einem weiteren Merkmal der Erfindung zwischen 1 ms und 1 sek, vorzugsweise bei 100 ms. Bei einer derartigen Wiederholfrequenz im Bereich zwischen 1 Hz bis 1000 Hz bei einer entsprechend geringen Dauer der Impulspakete wird erreicht, dass die im Mittel übertragene Energie eingestellt bzw. angepasst werden kann, so dass beispielsweise bei handgeführten Schweißbrennern die Energiemenge vorgegeben werden kann und somit eine Anpassung an bestimmte Vorschriften und Normen erfolgen kann. Somit wird ohne Qualitätseinbußen eine sichere und rasche Zündung des Lichtbogens auch bei begrenzter Energiemenge am Ausgang der Schweißanlage erreicht.

Wenn der Schweißstrom eine bestimmte Zeitdauer nach Beginn der Zündimpulse bzw. der Impulspaketaussendung angelegt wird, kann eine noch bessere Zündung erfolgen, da während dieser vorgegebenen Zeitdauer eine Vorionisierung der Luft bzw. des Gasstromes stattfindet und somit eine bessere Zündung möglich wird, da entsprechende Ladungsträger zwischen der Schweißelektrode und dem Werkstück bereits vorhanden sind.

Vorteilhafterweise werden die Dauer der Impulspakete bzw. die Anzahl der Zündimpulse je Impulspaket in Abhängigkeit der Schweißparameter, wie z.B. des Materials des zu bearbeitenden Werkstücks, des Materials der Schweißelektrode und/oder des verwendeten Schutzgases, etc., eingestellt. Damit kann eine Anpassung des Zündverfahrens an die jeweiligen Schweißbedingungen erfolgen. Beispielsweise kann eine Anpassung bei der Verwendung von schwer ionisierbaren Schutzgasen, wie z.B. Helium, vorgenommen werden, so dass auch dann eine sichere und sehr rasche Zündung möglich wird.

Die vorliegende Erfindung wird anhand der beigefügten Abbildungen näher erläutert. Darin zeigen
- Fig. 1: eine schaubildliche Darstellung einer Schweißanlage bzw. einer Schweißeinrichtung;
- Fig. 2: ein Blockschaltbild der Schweißeinrichtung mit einer Einrichtung zur berührungslosen Zündung des Schweißlichtbogens;
- Fig. 3: ein Prinzipschaltbild einer Zündschaltung mit Thyristor nach dem Stand der Technik;
- Fig. 4: ein Prinzipschaltbild einer Zündschaltung nach dem Stand der Technik mit einer Funkenstrecke;
- Fig. 5: eine detailliertere Abbildung einer Zündschaltung;
- Fig. 6: bis 10 zeigen unterschiedliche zeitliche Verläufe der generierten Zündspannnung sowie Steuerspannung, in vereinfachter schematischer Form;
- Fig. 11: eine Ausführungsform einer Zündschaltung mit zweistufiger Impulskompressionsschaltung;
- Fig. 12: ein Ausführungsbeispiel zur Anwendung des erfindungsgemäßen Verfahrens bei einer aus dem Stand der Technik bekannten Zündschaltung mit Thyristor; und
- Fig. 13: ein weiteres Ausführungsbeispiel zur Anwendung des erfindungsgemäßen Verfahrens bei einer aus dem Stand der Technik bekannten Zündschaltung mit einer Funkenstrecke.

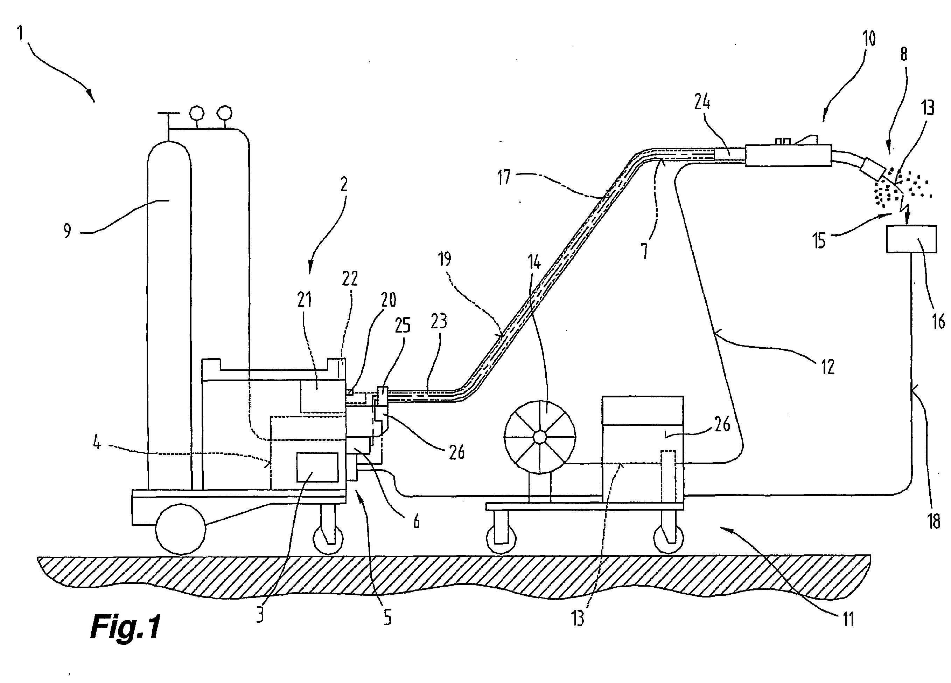

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode und einem Werkstück 16 wird über eine Schweißleitung 17 vom Leistungsteil 3 der Stromquelle 2 dem Brenner 10, insbesondere der Elektrode, zugeführt, wobei das zu verschweißende Werkstück 16, welches aus mehreren Teilen gebildet sein kann, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

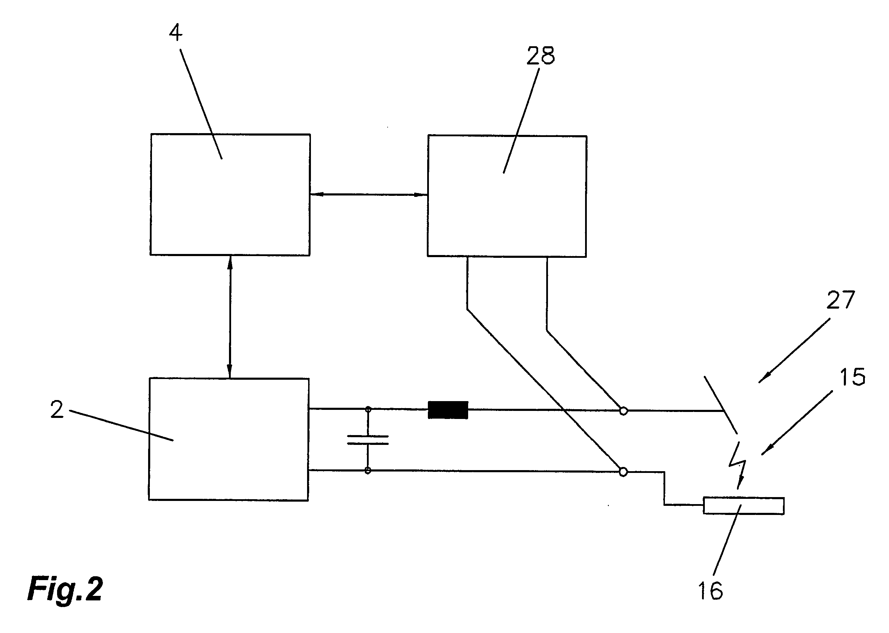

Fig. 2 zeigt ein prinzipielles Blockschaltbild einer Schaltung zum berührungslosen Zünden eines Schweißlichtbogens mit einer Schweißstromquelle bzw. Stromquelle 2, welche den Schweißbrenner 10 gegenüber dem Werkstück 16 während des Schweißverfahrens mit entsprechendem Strom und entsprechender Spannung versorgt. Zum berührungslosen Zünden des Schweißlichtbogens 15 zwischen einer Schweißelektrode 27, in diesem dargestellten Beispiel eine nicht abschmelzende Elektrode, und dem zu bearbeitenden Werkstück 16 ist parallel zur Schweißelektrode 27 und dem Werkstück 16 eine Zündschaltung 28 angeordnet, welche hochfrequente Zündimpulse mit entsprechend hoher Spannung zwischen der Schweißelektrode 27 und dem Werkstück 16 anlegt, so dass die zwischen dem Schweißbrenner 10 und dem Werkstück 16 angeordnete Luft bzw. das Gas 8 ionisiert wird und die Ausbildung des Schweißlichtbogens 15 erleichtert. Zur Steuerung der Zündschaltung 28 dient die Steuerungsvorrichtung 4, welche auch mit der Schweißstromquelle 2 verbunden sein kann. Dabei hat die Steuervorrichtung 4 beispielsweise die Zündschaltung bei einem Betätigen eines Startschalters am Schweißbrenner 10 zu aktivieren und bei einer Zündung des Lichtbogens 15 diese wiederum zu deaktivieren, damit die Hochspannungsimpulse während des Schweißprozesses nicht ausgesendet werden. Selbstverständlich wäre es möglich, dass über den gesamten Schweißprozess die Hochspannungsimpulse ausgesendet werden könnten, wobei jedoch die Gefahr besteht, dass dadurch benachbarte Geräte gestört werden könnten. Üblicherweise werden somit die Hochspannungsimpulse nach dem Zünden des Lichtbogens beendet oder bei entsprechend notwendigen Bedingungen diese wiederum kurzzeitig aktiviert, d.h., dass beispielsweise bei einer Wechselstromschweißung synchron zum Nulldurchgang die HF-Zündung, also die Zündschaltung 28, aktiviert wird, um eine bessere und vor allem sichere Wiederzündung des Lichtbogens 15 zu erreichen.

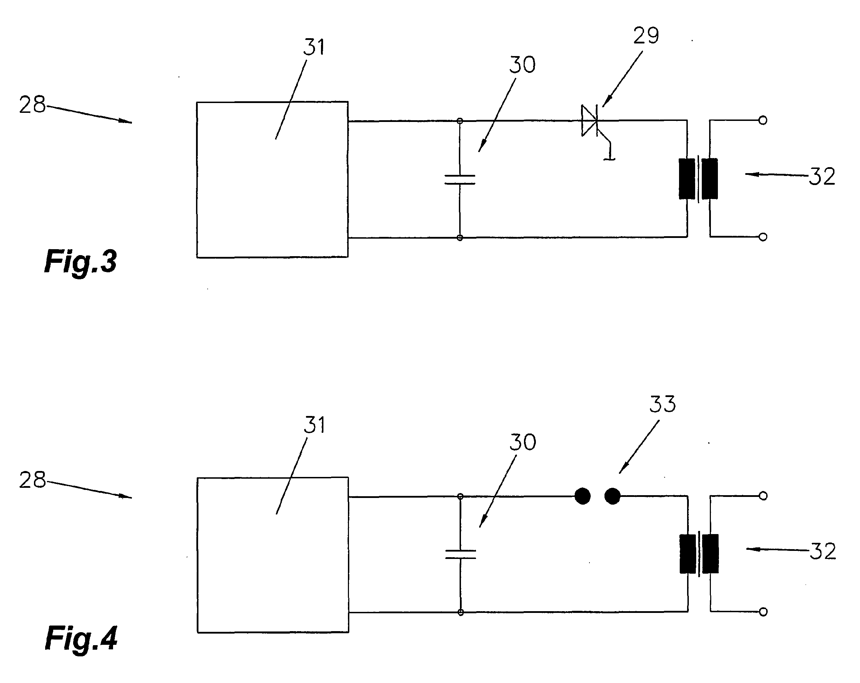

Die Fig. 3 und 4 zeigen prinzipielle Blockschaltbilder von Zündschaltungen, wie sie nach dem Stand der Technik existieren. Fig. 3 zeigt hierzu eine Zündschaltung 28 bei der ein Thyristor 29 als Schalter eingesetzt wird, um die Ladung eines Impulskondensators 30, welche von einer Ladeschaltung 31 erzeugt wird, über einen Hochspannungsübertrager 32 an die Schweißelektrode 27 und das Werkstück 16 (nicht dargestellt) zu übertragen. Hierbei ist es möglich, dass jede beliebige aus dem Stand der Technik bekannte Ladeschaltung eingesetzt werden kann. Die Entladeschaltung kann auch durch vier in Brückenschaltung angeordnete Thyristoren 29 aufgebaut werden, wie es beispielsweise in der EP 1 197 285 A2 beschrieben wird. Thyristoren 29 als Schalter sind insofern von Nachteil, als mit ihnen nur relativ niedrige Schaltfrequenzen erzielt werden können.

Bei der Variante gemäß dem Stand der Technik entsprechend Fig. 4 wird eine Funkenstrecke 33 als Schalter eingesetzt, wodurch zwar höhere Schaltfrequenzen erzielt werden können, allerdings ein erhöhter konstruktiver Aufwand verbunden ist. Dabei liegt bei den Funkenstrecken 33 ein wesentlicher Nachteil darin, dass von diesen Ozon erzeugt wird, wodurch es beim Einbau von Funkenstrecken 33 in einem Schweißgerät 1 durch die erhöhte Ozonbelastung zu Zerstörungen der elektronischen Bauelemente und/oder der Leiterplatten und/oder der Kunststoffe usw. kommen kann. Gleichzeitig werden durch die Funkenstrecken 33 erhöhte elektromagnetische Störungen verursacht, zu deren Vermeidung ein sehr großer Aufwand zur Abschirmung betrieben werden muss.

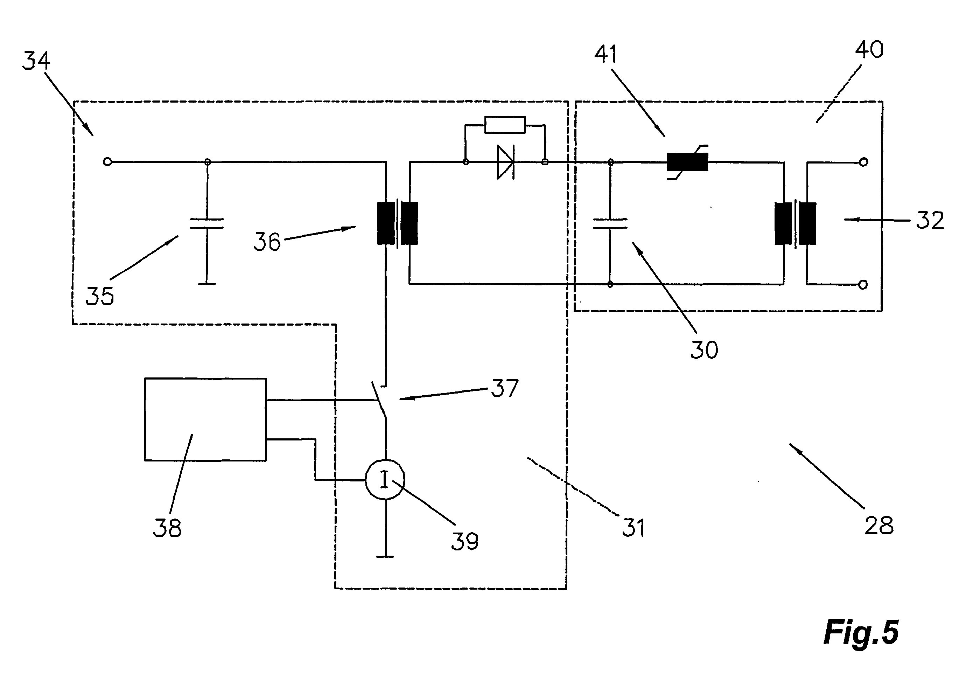

Fig. 5 zeigt eine alternative Zündschaltung 28, wobei die Ladeschaltung 31 einen Anschluss 34 zum Anschluss der Versorgungsspannung aufweist und einen gegen Masse geschalteten Pufferkondensator 35. Der Pufferkondensator 35 bzw. der Anschluss 34 ist über einen Übertrager 36 und ein Schaltelement 37 gegen Masse geschaltet. Mittels der an dem Anschluss 34 anliegenden Versorgungsspannung wird der Impulskondensator 30 über den Übertrager 36 geladen.

Zusätzlich kann ein Stromsensor 39 angeordnet sein, der den Ladestrom detektiert und ein dazu proportionales Signal an die Steuerung 38 sendet. Bei der Ladeschaltung 31 wurde ein aus dem Stand der Technik bekannter Aufbau dargestellt, wobei jede beliebige aus dem Stand der Technik bekannte Ladeschaltung 31 eingesetzt werden kann. Weiters ist es möglich, dass anstelle der zusätzlichen Steuerung 38 eine direkte Ansteuerung von der Steuervorrichtung 4 des Schweißgerätes 1 durchgeführt wird.

Mit der Ladeschaltung 31 ist eine Impulskompressionsschaltung 40 verbunden, wobei diese eine magnetische Drossel 41 als Schalter, den Impulskondensator 30 und den Hochspannungsübertrager 32 umfasst. Über die magnetische Drossel 41 wird die Ladung des Impulskondensators 30 an den Hochspannungsübertrager 32 und von diesem an die Klemmen der Schweißelektrode 27 bzw. das Werkstück 16 (nicht dargestellt) übertragen bzw. geschalten. Die Steuerung der Ladung des Impulskondensators 30 erfolgt über den elektronischen Schalter 37, der von einer entsprechenden Steuerung 38 oder 4 angesteuert wird, so dass bei aktiviertem Schalter 37 ein Stromfluss über die Primärseite des Übertragers 36 stattfindet, wodurch eine Energieübertragung am Übertrager 36 hervorgerufen wird, die den magnetischen Schalter bzw. die Drossel 41 rückgesetzt. Beim Deaktivieren des Schalters 37 wird dann die magnetisch gespeicherte Energie über den Übertrager 36 übertragen, wodurch der Impulskondensator 30 geladen wird. Wird eine bestimmte Spannungs-Zeitfläche beim Laden des Impulskondensators 30 erreicht, so schaltet automatisch die magnetische Drossel 41 durch, so dass die im Impulskondensator 30 geladene Energie über den Hochspannungsübertrager 32 entladen wird und ein Strom- bzw. Spannungsimpuls erzeugt wird. Durch die Ausführung des Schalters als magnetische Drossel 41 können sehr hohe Schaltfrequenzen erzielt und somit eine rasche und sichere Zündung des Lichtbogens 15 erreicht werden. Darüber hinaus ist die Drossel 41 sehr robust im Bezug auf die bei der Zündung des Schweißlichtbogens 15 auftretenden hohen Spannungen und Ströme. Im Gegensatz zu Funkenstrecken 33, welche üblicherweise gekühlt werden müssen, ist der bauliche Aufwand bei der Drossel 41 relativ gering, wobei diese auch erheblich weniger Störsignale bildet.

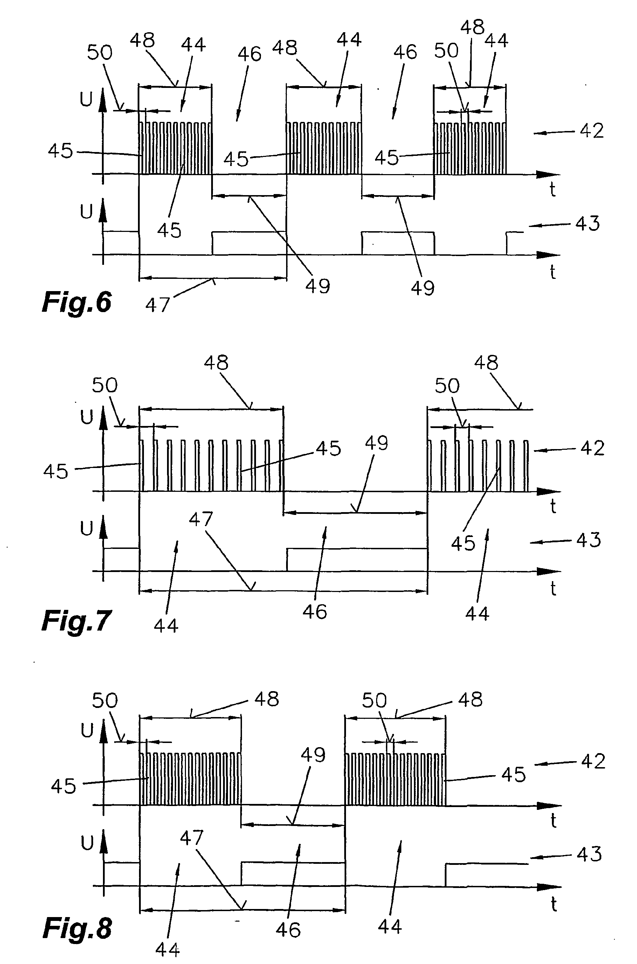

In den Fig. 6 bis 10 sind unterschiedliche zeitliche Verläufe eines gebildeten HF-Ausgangssignales 42 und einer Steuerspannung 43 dargestellt. Dabei wurde das HF-Ausgangssignal 42 schematisch in Form von Rechteckimpulsen, insbesondere der erzeugten Strom- und/oder Spannungsimpulse, dargestellt. Üblicherweise werden die Rechteckimpulse durch Strom- und/oder Spannungsimpulse mit ausschwingendem Verlauf gebildet. Dabei wird das HF-Ausgangssignal 42 grundsätzlich derart gebildet, dass an die Schweißelektrode 27 ein oder mehrere Impulspakete 44 mit vorgebbarer Frequenz oder Zeitdauer angelegt werden und in einem Impulspaket 44 mehrere aufeinanderfolgende Zündimpulse 45 ausgegeben werden, wobei jeweils zwischen den Impulspaketen 44 eine Paketpause 46 ausgeführt wird. Dabei ist das Verhältnis der Wiederholungsrate bzw. Periodendauer 47 der Impulspakete 44 zur Dauer bzw. Periodendauer 50 der Zündimpulse 45 hoch. Beispielsweise beträgt die Paketperiodendauer 47, bestehend aus einem Impulspaket 44 mit einer daran anschließenden Paketpause, 1 ms bis 1 s entsprechend einer Wiederholungsfrequenz der Impulspakete 44 von 1-1000 Hz. Die Dauer 48 der Impulspakete 44 entspricht vorzugsweise 50 µs bis 300 ms, wobei diese frei vorgebbar ist. Die Periodendauer 50 der Zündimpulse 45 beträgt beispielsweise 25 µs bis 1 ms entsprechend einer Wiederholungsfrequenz von 1 kHz bis 40 kHz.

Durch das Aussenden von einzelnen Impulspaketen 44 können unterschiedliche HF-Ausgangssignale 42 mit unterschiedlichen zeitlichen Verläufen bzw. Frequenzen gebildet werden. Damit kann eine optimale Anpassung des HF-Ausgangssignals 42 an die Schweißbedingungen vorgenommen werden, d.h., dass je nach eingestellten Parametern von dem Schweißgerät 1 bzw. der Steuervorrichtung 4 und/oder 38 entsprechende HF-Ausgangssignale 42 generiert werden, so dass eine sehr rasche und sichere Zündung des Lichtbogens 15 erreicht werden kann.

Beispielsweise ist in Fig. 6 das HF-Ausgangssignal 42 derart aufgebaut, dass eine Paketperiodendauer 47, die aus einem Impulspaket 44 und einer Paketpause 46 besteht, aus einem gleichen Taktverhältnis gebildet wird, d.h., dass eine Zeitdauer 48 für ein Impulspaket 44 gleich groß einer Zeitdauer 49 für die Paketpause 46 ist. Somit ist es möglich, dass je nach Dimensionierung, also je nach der Länge der Zeitdauer 48 eine Vielzahl von Zündimpulsen 45 in dem Impulspaket 44 enthalten sind. Beispielsweise können in einem Impulspaket 44 zwischen 1 und 300, bevorzugt 60, Zündimpulse 45 enthalten sein. Die Anzahl der möglichen Zündimpulse 45 hängt dabei von der gewählten Zündperiodendauer 50 bzw. deren Frequenz ab.

Der wesentliche Vorteil der paketförmigen Bildung des HF-Ausgangssignals 42 liegt darin, dass damit die ausgesendete Energie reduziert werden kann, wobei jedoch eine sichere Zündung des Lichtbogens 15 gewährleistet ist, d.h., dass durch das Anlegen von Impulspaketen 44 an die Schweißelektrode 27 im Mittel weniger Energie an diese übermittelt wird, wobei jedoch während eines Impulspaketes 44 eine sehr hohe Energiemenge für die Zündung des Lichtbogens 15 vorhanden ist. Somit ist es möglich, dass aufgrund einer entsprechenden Steuerung des HF-Ausgangssignals 42 die mittlere Energie eingestellt bzw. vorgegeben werden kann, so dass das vorliegende Zündverfahren auch bei manuell geführten Schweißbrennern oder auch bei automatischen Anwendungen, bei welchen die maximale Leistung bzw. Energiemenge begrenzt ist, einsetzbar ist.

In Fig. 7 ist ein weiteres Beispiel des HF-Ausgangssignals 42 dargestellt. Dabei wurde zum Unterschied zu dem Ausführungsbeispiel der Fig. 6 nunmehr die Paketperiodendauer 47 beispielsweise verdoppelt, wobei das Tastverhältnis zwischen der Zeitdauer 48 und 49 für die Impulspakete 44 und der Paketpausen 46 wiederum 50% beträgt.

Bei diesem Ausführungsbeispiel erfolgt die Steuerung über die Anzahl der Zündimpulse 45 in einem Impulspaket 44, d.h., dass in einem Impulspaket 44 immer wieder die gleiche bzw. vorgegebene Anzahl von Zündimpulsen 45 gebildet wird, wobei jedoch die Frequenz der Zündimpulse 45 verändert wird. Damit dies ersichtlich ist, wurde bei dem dargestellten Ausführungsbeispiel in Fig. 7 die selbe Anzahl von Zündimpulsen 45, wie sie in Fig. 6 in einem Impulspaket 44 enthalten sind, verwendet. Beim Vergleich mit Fig. 6 ist nunmehr ersichtlich, dass also wiederum die selbe Anzahl von Zündimpulsen 45 in einem Impulspaket 44 enthalten ist, jedoch aufgrund der Verlängerung der Zeitdauer 48 für das Impulspaket 44 die Zündperiodendauer 50 entsprechend angepasst wurde.

Weiters ist es auch möglich, wie in Fig. 8 schematisch dargestellt, dass die Frequenz bzw. Zündperiodendauer 50 konstant gehalten wird, wodurch eine beliebige Anzahl von Zündimpulsen 45 in einem Impulspaket 44 gebildet wird, d.h., dass aufgrund der Zeitdauer 48 für das Impulspaket 44 über diese Zeitdauer 48 die Zündimpulse 45 mit konstanter Frequenz ausgesendet werden. Zum Vergleich wurde dabei die Frequenz bzw. Zündperiodendauer 50 von Fig. 6 in Fig. 8 verwendet, so dass nunmehr eindeutig ersichtlich ist, dass aufgrund der längeren Zeitdauer 48 für das Impulspaket 44 wesentlich mehr Zündimpulse 45 innerhalb des Impulspaketes 44 gebildet werden.

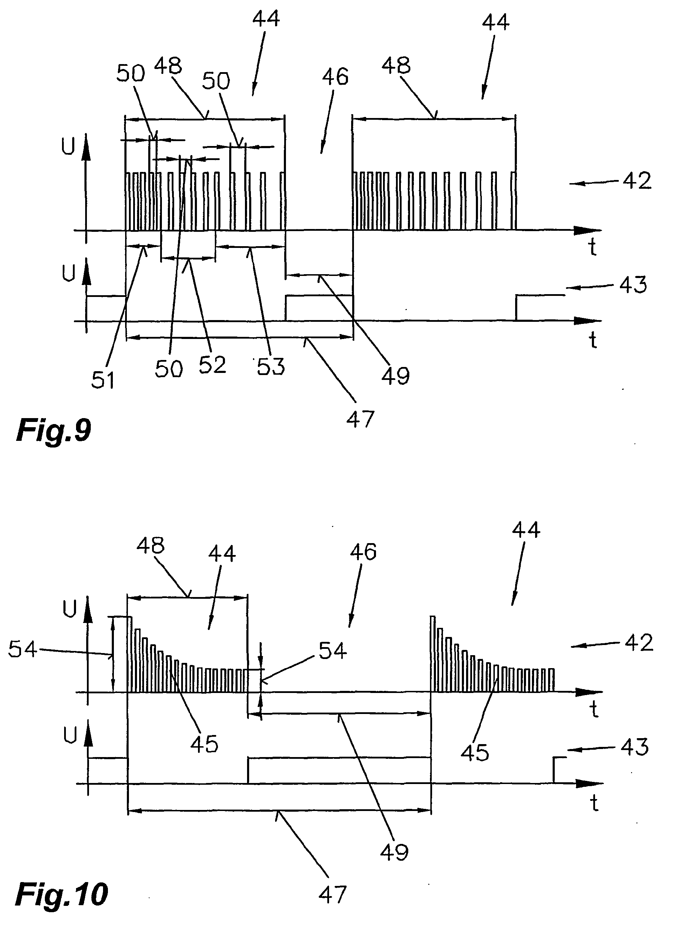

Bei dem Ausführungsbeispiel in Fig. 9 wird das HF-Ausgangssignal 42 derart gebildet, dass die Frequenz bzw. Zündperiodendauer 50 innerhalb des Impulspaketes 44 verändert wird. Wie schematisch dargestellt, wird dabei beispielsweise über definierte Zeitbereiche 51 bis 53 jeweils eine geänderte Frequenz bzw. Zündperiodendauer 50 in diesen Zeitbereichen 51 bis 53 ausgeführt. Weiters ist aus diesem Ausführungsbeispiel ersichtlich, dass das Tastverhältnis zwischen den Impulspaketen 44 und den Pulspausen 46 in einer Paketperiodendauer 47 verändert wurde, so dass nunmehr die Zeitdauer 48 für ein Impulspaket 44 länger ist, als die Zeitdauer 49 für die Pulspause 46. Selbstverständlich ist es möglich, dass die Zeitdauer 48 für das Impulspaket 44 kürzer als die Zeitdauer 49 für die Paketpause 46 sein kann.

Weiters ist es auch möglich, dass die Spannungshöhe 54 der Zündimpulse 45 für jedes Impulspaket 44 bzw. innerhalb eines Impulspaketes 44 verändert werden kann, wie dies in Fig. 10 dargestellt ist. Bei diesem Ausführungsbeispiel erfolgt dabei eine Verringerung der Spannungshöhe 54 innerhalb eines Impulspaketes 44.

Grundsätzlich ist zu erwähnen, dass es möglich ist, dass der Schweißstrom erst eine bestimmte Zeit nach dem Anlegen des ersten Zündimpulses 45 bzw. Impulspaketes 44 eingeschaltet wird, wodurch eine gewisse Vorionisierung der Luft bzw. des Gases 8 zwischen der Schweißelektrode 27 und dem Werkstück 16 und somit eine rasche und sichere Zündung des Schweißlichtbogens 15 stattfindet. Es ist auch möglich, dass die Impulspaketdauer, also die Zeitdauer 48 bzw. die Anzahl der Zündimpulse 45 innerhalb eines Impulspakets 44 sowie die Paketperiodendauer 47 der Impulspakete 44 vorzugsweise an die Schweißbedingungen angepasst werden können, d.h., dass beispielsweise das HF-Ausgangssignal 42, insbesondere die Art bzw. Form des HF-Ausgangssignals 42, aufgrund der eingestellten Parameter, wie das Material des Werkstücks 16, das Material der Schweißelektrode 27 oder das verwendete Schutzgas oder dgl., erzeugt wird. Somit kann für jedes Schweißverfahren ein optimales Zündverfahren angewendet werden.

Die Einkopplung der HF-Zündung, insbesondere des HF-Ausgangssignals 42, in den Schweißkreis kann auf die unterschiedlichsten aus dem Stand der Technik bekannten Arten erfolgen. Hierbei werden beispielsweise die Hochspannungszündimpulse über einen Einkoppelkondensator kapazitiv eingekoppelt. Es ist natürlich auch möglich, die Einkopplung der hochfrequenten Zündimpulse induktiv durchzuführen.

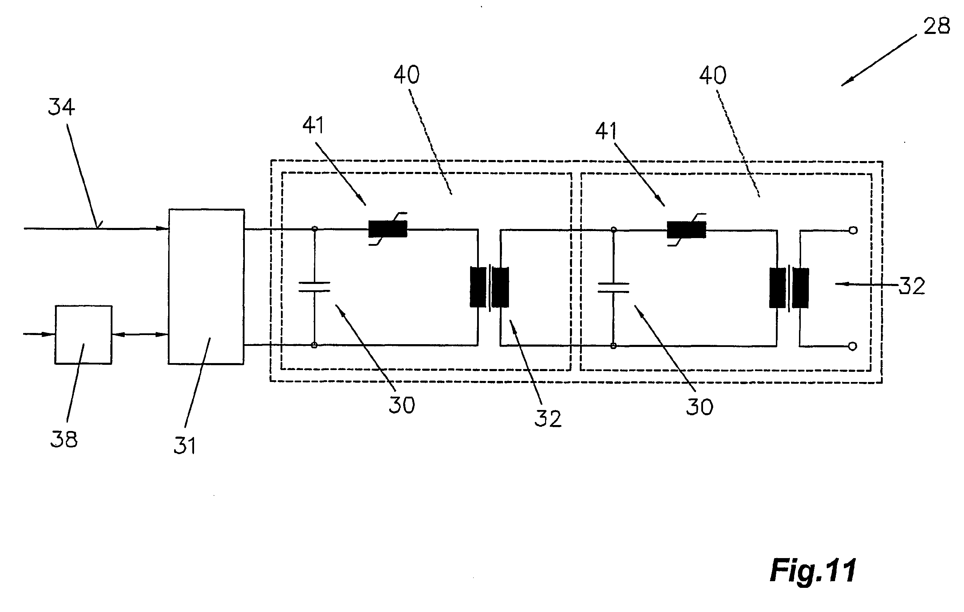

In Fig. 11 ist eine Variante einer Zündschaltung bei der die Impulskompressionsschaltung 40 zweistufig aufgebaut ist, wobei jede Stufe einen Impulskondensator 30, eine magnetische Drossel 41 und einen Hochspannungsübertrager 32 aufweist. Mehrstufige Impulskompressionsschaltungen 40 haben den Vorteil, dass die Anforderungen an die Ladeschaltung 31 nicht zu hoch sind, allerdings wird der bauliche Aufwand erhöht.

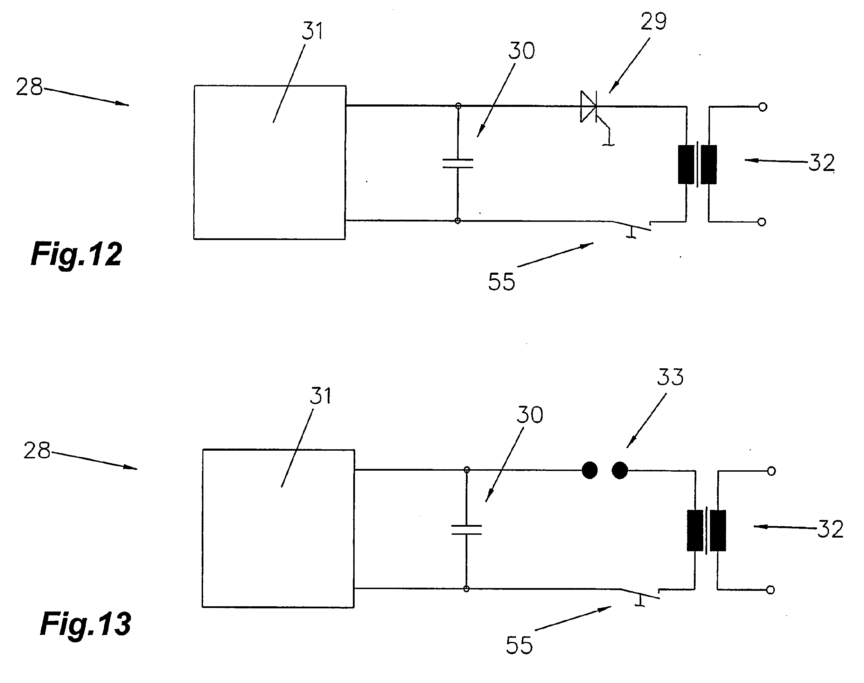

In den weiteren Beispielen der Fig. 12 und 13 ist eine Anwendung des Verfahrens zum Aussenden von Impulspaketen 44 bei den aus dem Stand der Technik bekannten Systemen, wie mit einem Thyristor 29 oder einer Funkenstrecke 33 dargestellt. Hierzu ist der Einfachheit halber ein Schaltelement 55 integriert, welches den Primärkreis des Hochspannungsübertragers 32 unterbricht, so dass entsprechende Ausgangsimpulse erzeugt werden. Damit ist es möglich, durch entsprechende Ansteuerung des Schaltelementes 55 über eine definierte Zeitdauer 48 ein Impulspaket 44 zu erzeugen, so dass ein entsprechendes HF-Ausgangssignal 42, wie in den Fig. 6 bis 10 beschrieben, generiert werden kann. Selbstverständlich kann dies durch entsprechende Ansteuerung des Thyristors 29 oder einer gesteuerten Funkenstrecke 33 realisiert werden. Weiters kann zur Anwendung des erfindungsgemäßen Verfahrens die Ladeschaltung 31 entsprechend gesteuert werden, so dass am Ausgang bzw. an der Elektrode 27 die Impulspakete 44 mit den dazwischen gebildeten Pulspausen 46 mit den darin enthaltenen hochfrequenten Zündimpulsen 45 gebildet werden.

Wesentlich ist, dass das erzeugte HF-Ausgangssignal 42 durch einzelne Impulspakete 44 mit dazwischen angeordneten Paketpausen 46 gebildet wird. Damit kann die mittlere Energie bzw. Leistung über das Tastverhältnis eingestellt werden, so dass eine Anpassung der Leistung bzw. mittleren Energiemenge an die nationalen Vorschriften bzw. Normen durchgeführt werden kann.

## Patentansprüche

1. Verfahren zum berührungslosen Zünden eines Schweißlichtbogens (15), bei dem hochfrequente Zündimpulse (45) zwischen die Schweißelektrode und dem zu bearbeitenden Werkstück (16) zur Ionisierung der Strecke zwischen der Schweißelektrode und dem Werkstück (16) angelegt werden, und bei dem nach dem Zünden des Schweißlichtbogens (15) der Schweißstrom zugeschaltet wird, **dadurch gekennzeichnet, dass** mehrere aufeinander folgende hochfrequente Zündimpulse (45) innerhalb mehrerer Impulspakete (44) mit vorgebbarer Frequenz, insbesondere Paketperiodendauer (47), oder Zeitdauer (48) angelegt werden, wobei jeweils zwischen den Impulspaketen (44) eine Paketpause (46) ausgeführt wird, sodass die im Mittel eingebrachte Energie das Sicherheitsrisiko minimiert.

2. Zündverfahren nach Anspruch 1, **dadurch gekennzeichnet, dass** die in einem Impulspaket (44) aufgegeben Zündimpulse (45) in der Anzahl und/oder Frequenz, insbesondere einer Zündperiodendauer (50), verändert werden.

3. Zündverfahren nach Anspruch 1 oder 2, **dadurch gekennzeichnet, dass** das Verhältnis der Paketperiodendauer (47) zur Dauer der Zündimpulse (45), also der Zündperiodendauer (50) hoch ist.

4. Zündverfahren nach einem der vorhergehenden Ansprüche, **dadurch gekennzeichnet, dass** die Zündimpulse (45) innerhalb eines Impulspakets (44) mit einer Zündperiodendauer (50) zwischen 25 µs und 1 ms, vorzugsweise 125 µs, angelegt werden.

5. Zündverfahren nach einem der vorhergehenden Ansprüche, **dadurch gekennzeichnet, dass** die Impulspakete (44) mit einer Paketperiodendauer (47) zwischen 1 ms und 1 s, vorzugsweise 100 ms, angelegt werden.

6. Zündverfahren nach einem der vorhergehenden Ansprüche, **dadurch gekennzeichnet, dass** der Schweißstrom eine bestimmte Zeitdauer nach dem ersten Zündimpuls (45) angelegt wird.

7. Zündverfahren nach einem der Ansprüche 1 bis 6, **dadurch gekennzeichnet, dass** die Zeitdauer (48) der Impulspakete (44) bzw. die Anzahl der Zündimpulse (45) je Impulspaket (44) in Abhängigkeit der eingestellten Schweißparameter, wie zum Beispiel des Materials des zu bearbeitenden Werkstücks (16), des Materials der Schweißelektrode (27), eines verwendeten Schutzgases (8), etc. eingestellt bzw. erzeugt wird.

## Claims

1. A method for the contactless ignition of a welding arc (15), in which high-frequency ignition pulses (45) are applied between the welding electrode and the workpiece (16) to be worked to ionize the gap between the welding electrode and the workpiece (16), and in which the welding current is connected after the ignition of the welding arc (15), **characterized in that** several successive high-frequency ignition pulses (45) are applied within several pulse packets (44) with presettable frequencies and, in particular, packet period durations (47), or time periods (48), wherein a packet interval (46) is each executed between said pulse packets (44) so that the average energy introduced minimizes saftey risks.

2. An ignition method according to claim 1, **characterized in that** the ignition pulses (45) emitted in a pulse packet (44) are changed in respect to their number and/or frequency and, in particular, ignition period duration (50).

3. An ignition method according to claim 1 or 2, **characterized in that** the ratio of the packet period duration (47) to the duration of the ignition pulses (45), i.e. the ignition period duration (50), is high.

4. An ignition method according to any one of the preceding claims, **characterized in that** the ignition pulses (45) within a pulse packet (44) are applied at an ignition period duration (50) of between 25 µs and 1 ms, preferably 125 µs.

5. An ignition method according to any one of the preceding claims, **characterized in that** the pulse packets (44) are applied at a packet period duration (47) of between 1 ms and 1 s, preferably 100 ms.

6. An ignition method according to any one of the preceding claims, **characterized in that** the welding current is applied for a defined time period following the first ignition pulse (45).

7. An ignition method according to any one of claims 1 to 6, **characterized in that** the time period (48) of the pulse packets (44) and the number of ignition pulses (45) per pulse packet (44), respectively, are adjusted or generated as a function of the adjusted welding parameters such as, e.g., the material of the workpiece (16) to be worked, the material of the welding electrode (27), a protective gas (8) employed, etc.

## Revendications

1. Procédé d'amorçage sans contact d'un arc électrique de soudage (15), où des impulsions d'amorçage (45) de haute fréquence sont appliquées entre l'électrode de soudage et la pièce à travailler (16) en vue d'ioniser l'espace entre l'électrode de soudage et la pièce à travailler (16), et où le courant de soudage est appliqué après l'amorçage de l'arc électrique de soudage (15),
**caractérisé en ce que**
plusieurs impulsions d'amorçage (45) successives, de haute fréquence, sont appliquées dans le cadre de plusieurs paquets d'impulsions (44) d'une fréquence prédéterminée, en particulier d'une durée de période (47) prédéterminée du paquet, ou d'une durée temporelle prédéterminée (48),
respectivement une pause inter-paquet (46) étant observée entre les paquets d'impulsions (44), de manière telle que l'énergie moyenne introduite réduise à un minimum le risque de sécurité.

2. Procédé d'amorçage selon la revendication 1,
**caractérisé en ce que**
l'on fait varier le nombre et/ou la fréquence des impulsions d'amorçage (45) émises dans le cadre d'un paquet d'impulsions (44), notamment une durée de période d'amorçage (50) de celles-ci.

3. Procédé d'amorçage selon les revendications 1 ou 2,
**caractérisé en ce que**
le rapport entre la durée de période (47) d'un paquet et la durée des impulsions d'amorçage (45), c'est-à-dire la durée de période d'amorçage (50), est élevé.

4. Procédé d'amorçage selon l'une des revendications précédentes,
**caractérisé en ce que**
les impulsions d'amorçage (45) à l'intérieur d'un paquet d'impulsions (44) sont appliquées avec une durée de période d'amorçage (50) comprise entre 25 µs et 1 ms, de préférence une durée de 125 µs.

5. Procédé d'amorçage selon l'une des revendications précédentes,
**caractérisé en ce que**
les paquets d'impulsions (44) sont appliqués avec une durée de période de paquet (47) comprise entre 1 ms et 1 s, de préférence une durée de 100 ms.

6. Procédé d'amorçage selon l'une des revendications précédentes,
**caractérisé en ce que**
le courant de soudage est appliqué après écoulement d'un temps prédéfini après la première impulsion d'amorçage (45).

7. Procédé d'amorçage selon l'une des revendications 1 à 6,
**caractérisé en ce que**
la durée temporelle (48) des paquets d'impulsions (44), ou le nombre d'impulsions d'amorçage (45) par paquet d'impulsions (44), sont réglés ou générés en fonction des paramètres de soudage définis, tels que la matière de la pièce à travailler (16), la matière de l'électrode de soudage (27), le gaz de protection utilisé (8), etc.
